# EUROPEAN PATENT SPECIFICATION

(11) **EP 3 606 712 B1**
(45) Date of publication and mention of the grant of the patent: **05.05.2021**
(21) Application number: 18717127.7
(22) Date of filing: 26.03.2018
(51) Int. Cl.: B28B 23/00, E04C 5/06, E04C 5/07, E21D 11/00, B29C 70/54, B29C 70/56

(54) **METHOD OF PRODUCING CEMENT SEGMENTS FOR TUNNELS, REINFORCED WITH COMPOSITE MATERIAL**
VERFAHREN ZUR HERSTELLUNG VON ZEMENTSEGMENTEN FÜR MIT VERBUNDWERKSTOFFEN VERSTÄRKTE TUNNEL
PROCÉDÉ DE FABRICATION DE SEGMENTS EN CIMENT POUR TUNNELS, RENFORCÉS PAR UN MATÉRIAU COMPOSITE

(30) Priority: 05.04.2017 IT 201700037480
(43) Date of publication of application: 12.02.2020
(73) Proprietor: ATP S.r.l., 84012 Angri (SA) (IT)
(72) Inventor: GIAMUNDO, Aniello Anna, I-84012 Angri (SA) (IT); MADDALUNO, Giona, I-84012 Angri (SA) (IT); MEDA, Alberto, I-84012 Angri (SA) (IT); AFELTRA, Rita, I-84012 Angri (SA) (IT); CARRATELLI, Angelo, I-84012 Angri (SA) (IT); NARDONE, Fabio, I-84012 Angri (SA) (IT); SPAGNUOLO, Simone, I-84012 Angri (SA) (IT)
(74) Representative: Fiammenghi, Eva
(86) International application number: PCT/IB2018/052023
(87) International publication number: WO 2018/185600

(56) References cited:
- WO-A1-03/025305
- JP-A- H0 476 147
- JP-A- 2003 225 950

## Description

### Technical field

The present invention relates to the industry of precast structures for the construction of tunnels. More in detail, the present invention relates to the construction of innovative structural elements in composite material for the production of reinforcements for precast segments to be used when making tunnels and underground tunnels.

### Background art

The cladding of tunnels constructed with full section excavation techniques, performed by Tunnel Boring Machines (TBMs), consists of a series of rings, made by flanking reinforced concrete segments. The segments are vault sections in precast, reinforced concrete, which are positioned and forced by the TBM so as to obtain complete cladding rings. Currently, said vault sections are made of concrete and reinforced with a metal reinforcement, thus creating a reinforced concrete product. In most cases, the segments thus obtained fulfill very well their task. However, there are situations in which this type of product shows drawbacks, substantially due to the metal nature of the reinforcement thereof.

Said drawbacks are found, in particular, in situations such as those concerning the demolition of temporary segments, before the tunnel is installed, and in the installation of the final segments, which, during their entire stay period, will be subjected to the aggressive action of the external environment or of the fluids transported. The first of the aforesaid cases occurs, for example, during the construction of a tunnel, in which there are segments which will not be part of the tunnel but which may be used to launch the TBM or to cross areas which will later be demolished to allow an enlargement. An example is the case of the construction of underground stations. Other segments may instead be demolished to make room for emergency connection tunnels (bypasses), or to provide space for the construction of niches for fire rescue. In all these situations, the metal reinforcement, present in the segment, is certainly a major obstacle to the demolition, since the machine is not capable of cutting the steel and therefore the segments must be disassembled/demolished to later allow the passage of the TBM. Furthermore, once the segments have been demolished, all the resulting material, before being sent to a landfill or reused for other applications, must be separated from the metal component. The latter operation generally involves high costs. Another drawback which may arise during the partial demolition of a segment, for example when constructing niches and bypasses, is given by the risk of damaging also that part of the same segment which should instead remain on site permanently, never mind the greater processing times and the relevant risks mainly for operators.

As mentioned, other drawbacks may also be found in the application of permanent segments: in these cases, the problems are due to the high reactivity that the steel, present in the reinforcement, shows towards the chemical agents with which it is in contact.

Furthermore, in a tunnel, the chemical aggression to the reinforcement may come from both the inside and the outside. In hydraulic tunnels, for example, fluids run which are often very aggressive, as in the case of sewer pipes. For these reasons and in these applications, a waterproofing of the internal wall is usually carried out, precisely to avoid the corrosion of the cladding reinforcement. However, this treatment is subject to wear: it may be repaired but the operation, in addition to being costly, forces the pipeline to be temporarily put out of service. In the case of road or rail tunnels, it is the external environment which may be very aggressive. Chlorides are often found, which are responsible for the rapid deterioration of the metal reinforcement. Tunnels dug in the proximity of coasts, or even below the sea, are a typical example. In all the situations listed so far, it is difficult to obtain the protection of the segment, if not totally impossible.

To date, there are several proposals for trying to achieve an external waterproofing, but generally these are solutions which involve definitely high costs and which strongly hinder the productivity of the plant.

Tunnel segments are also the object of various international patents, such as, for example, Chinese patent CN 103833296 which relates to a tunnel segment. This is achieved by a sequence of different production steps: 1) weighing and mixing of 280 parts of medium sand with a grain size of 2.5 mm, 150 parts of fine sand with a grain size of 1.25 mm and 170 parts with a grain size of 0.5 mm; 2) addition of 150 parts of cement and stirring; 3) addition of 50 parts of water and stirring for 5 minutes; 4) extrusion and vibration; 5) maintenance work for 7 days. Following these steps, polishing is provided for. The segment of the Chinese invention has advantages such as high resistance, clean appearance, anti-slip features, long life, no peeling. However, the Chinese patent, as the other existing patents, does not solve the problems exposed JP-A-2003 225950 discloses a method of producing cement segments for tunnels in accordance with the preamble of claim 1.

The limits listed for steel reinforcements may, in principle, be overcome by using reinforcements in fiberglass, which is one of the most widespread composite materials for the excellent qualities of lightness, strength and stress resistance thereof. Furthermore, given the remarkable structural stability and the chemical-physical properties it has, resulting from the combination of the constituent substances thereof, fiberglass shows a remarkable chemical inertia which contributed to the application thereof even in environments which, generally, show corrosive effects on metal; furthermore, it has a high mechanical resistance/weight ratio, atmospheric agents and UV resistance, low thermal and electrical conductivity, durability, non-toxicity, lightness.

However, in the case of the segment, the use of reinforcements in composite material, produced according to currently existing technologies, shows various limits related to the geometric complexity of the product. Each product is different from the other: the sides are twisted and the main reinforcements develop on a curvilinear axis. The construction of a ring of this type, according to a current designing method, requires an average of a hundred different models related to the reinforcement elements.

With reference to the production aspect alone, it is clear that the construction of fiberglass reinforcements for such types of products would be extremely costly. In addition, there is the difficulty related to the assembly of the elements themselves (it should be noted that with fiberglass it is not possible to carry out welding operations and that all joints must be made by binding) and economically unsustainable solutions arise therefrom.

A structural criticality, related to a possible construction with fiberglass reinforcements of a traditional type, should also be pointed out. In the solutions known up to date, the maximum tangential tension of adhesion of the composite bars to the concrete is typically lower than that of a steel bar with improved adhesion. This is proven by comparative tests carried out on different types of fiberglass bars compared to traditional steel bars.

In fact, while steel bars are extracted, breaking up the surrounding concrete, in the case of composite bars, it is the surface in polymeric resin which detaches from the underlying fiber substrate, with the surrounding concrete still perfectly intact. This aspect becomes potentially critical in the case of the products in question, which are characterized by a relatively reduced adhesion length (on average the length of the main reinforcement does not exceed 3 - 3.5 meters).

### Description of the invention

The present invention is defined by the method of claim 1 and relates to an innovative process for producing segments for constructing tunnels and reinforced tunnels by means of reinforcement elements in unidirectional composite material. The segments thus made are advantageously characterized by a geometry allowing the construction of reinforcement cages for tunnel segments which may be assembled with modularity criteria. The segment reinforcement cage will consist of a plurality of flat elements which together constitute the main reinforcement, and a plurality of flat elements which together constitute the secondary reinforcement, and seaming elements between these components.

The particular geometry of each element of the main reinforcement optimizes the structural performance of the product and allows to advantageously overcome the criticality related to the adhesion of the bars of composite material inside the concrete.

The production technology allows the deposition of the unidirectional composite material, consisting of continuous fibers previously impregnated with a determined quantity of resin, preferably glass fibers, on a board on which a plurality of fixed pins have been previously positioned occupying the position of the vertices of a closed polygonal line which reproduces the shape of the segment to be made.

The production plant consists of a preparation area which varies according to the type of unidirectional composite material used to manufacture the reinforcement. In an embodiment in which said unidirectional composite material is fiberglass, the plant advantageously consists of at least one common creel and at least one resin bath in which the glass fiber is impregnated with resin before being transferred to a nozzle.

For a correct on site laying of the unidirectional composite yarn, said nozzle is fixed and a translating board moves therebelow through a common moving mechanism.

In an alternative version of the present invention, said board is fixed and the nozzle, from which the unidirectional composite yarn exits, moves thereon.

Advantageously, the production takes place by means of the following steps:
A. Preparing the composite yarn, for example by means of said creel and said resin bath, and transferring it to the nozzle;
B. making each single flat element of the primary reinforcement by the two sub-steps of:
   B.1 arranging the fixed pins on said board so as to define the closed polygonal line corresponding to the design shape of the primary reinforcement elements;
   (B.2) pre-tensioning, in which the unidirectional composite yarn is pretensioned on said board, around the closed polygonal line defined by said fixed pins;
C. making each single flat element of the secondary reinforcement by the two sub-steps of:
   C.1 arranging the fixed pins on said board so as to define the closed polygonal line corresponding to the design shape of the secondary reinforcement elements. In particular, said secondary reinforcement elements are advantageously characterized by the presence of a plurality of housings, or slits, adapted to allow a correct and stable assembly with the primary reinforcement elements;
   C.2) pre-tensioning, in which the unidirectional composite yarn is pretensioned on said board, around the closed polygonal line defined by said fixed pins;
D. assembly, in which each flat element of the primary reinforcement is fitted into the special housings arranged on each flat element constituting the secondary reinforcement, forming the structural reinforcement cage of the segment;
E. strengthening, in which the connection between the primary reinforcement elements and the secondary reinforcement elements is made stable through a "seaming" technique, preferably with a glass roving pre-impregnated preferably with a photo-activated resin;
F. casting, in which, using known concrete working techniques, the concrete is cast and the segment with the reinforcement in composite material is made.

Advantageously, by means of a force sensor placed in the moving mechanism of the nozzle or in the moving mechanism of the translating board, it is possible to monitor and, if need be, adjust the pulling force with which the unidirectional composite yarn is pretensioned around the fixed pins.

Advantageously, the pre-tensioning steps provide for the repeated passage of the unidirectional composite yarn on the polygonal line provided for, until the desired resistant section is achieved. Upon completion of the pre-tensioning step, it is necessary to wait for the complete polymerization of the resin before moving on to the next assembly step.

It is apparent that the construction of a single structure, which combines in the same item the mechanical performances previously offered by a plurality of steel bars connected to one another, is a remarkable advantage both from the point of view of the production times and from the economic point of view.

Advantageously, in a particular embodiment of the present invention, the primary reinforcement may consist of the linking of a plurality of primary rings, preferably 2 or 3 primary rings. The possibility to realize the primary reinforcement through the linking of multiple equal primary rings brings further advantages in terms of modularity, optimization of the resistant sections and overcoming of the criticality related to the adhesion.

Advantageously, in the embodiment with linked rings, it is possible to vary the transversal dimension of the segment by simply varying the overlap area between the primary rings.

Thereby, segments of different size may be advantageously made using the same basic module, i.e., a primary ring.

Advantageously, through the linking of the primary rings, it is possible to increase the amount of reinforcement in predetermined areas, corresponding to the areas of greatest stress, by designing the overlapping of the rings in said most stressed areas of the segment. Advantageously, as both the primary and the secondary reinforcements consist of closed rings, the sliding of the reinforcement inside the concrete is prevented. Therefore, regardless of the adhesion of the bar to the concrete of the segment, the distance between two angles of the closed polygonal line defined by the reinforcement, represents the net gap with respect to which the deformation values of the reinforcement shall be calculated. A "designed" reduction of such gap, which is made possible by varying the overlap area of the primary rings which constitute the primary reinforcement, has the advantageous effect of reducing the percentage extension of the section of competence and of consequently reducing the width of the slits in the concrete, with a greater redistribution thereof.

Advantageously, the secondary reinforcement also consists of a closed polygonal line, thus obtaining for this element the same advantages just described for the primary reinforcement.

The particular geometry of each single flat element constituting the secondary reinforcement entails two fundamentally economic advantages:
- the first is that evidently the pieces to be produced are reduced;
- the second is that a function of remarkable aid to the assembly is entrusted to such elements, along with the structural function. In fact, the position of the housings allows an "assembly box" approach, which speeds up production and minimizes the possibility of error.

Given the uneven nature of the unidirectional composite material which constitutes the reinforcement, it is impossible to precisely define the diameter of the section of the reinforcement itself. For this reason, a range of the diameter of the equivalent section is defined (intended as the diameter of the circular section steel bar having a similar overall resistant section) of between 8 mm and 20 mm.

The advantages offered by the present invention are apparent in the light of the above description and will be even more apparent by virtue of the accompanying Figures and the related detailed description.

### Description of the Figures

The invention will be described below in at least one preferred embodiment thereof, by way of explanation and not by way of limitation, with the aid of the accompanying Figures, in which:
- FIGURE 1 shows the board 4 with the arranging of the fixed pins 5 to define the closed polygon 9 around which the nozzle 6 lays the unidirectional composite yarn 8.
- FIGURE 2 shows an example of segment 100 to show the geometry thereof. It consists of an extrados 101, an intrados 102, a pair of longitudinal surfaces 103-103' having the same position and a pair of transverse surfaces 104-104' having a different position. FIGURE 2(b) shows a plan view of the same segment 100 of FIGURE 2(a).
- FIGURE 3 shows a three-dimensional view of a segment 100, showing the reinforcement cage 10 thereof consisting of the primary reinforcement 1 and of the secondary reinforcement 2 provided with housings 2.1 to favor the assembly step (G).
- FIGURE 4(b) shows an example of a primary reinforcement 1 consisting of two primary rings 1'-1" shown in FIGURE 4(a) equal to one another and linked.
- FIGURE 5(b) shows an example of a primary reinforcement 1 consisting of three primary rings 1'-1"-1''' shown in FIGURE 5(a) equal to one another and linked.

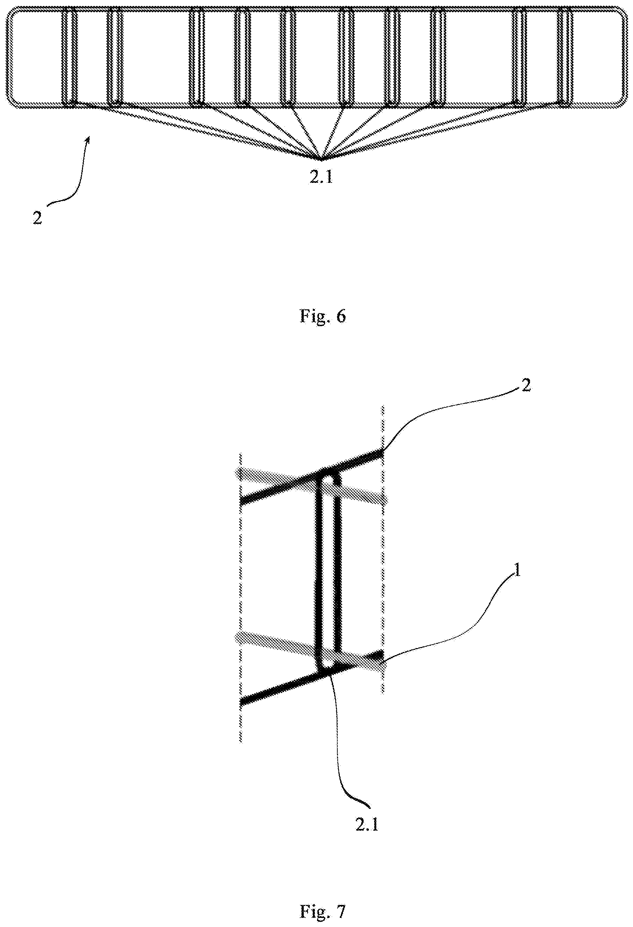

- FIGURE 6 shows a front view of a secondary reinforcement element 2 highlighting the housings 2.1 for the passage of the primary reinforcement elements 1.
- FIGURE 7 shows in detail the correct assembly shape of the primary reinforcement 1 inside the special housing 2.1 of the secondary reinforcement 2.

### Detailed description of the invention

The present invention will now be described purely by way of explanation and not by way of limitation or restriction, resorting to the Figures which show some embodiments in relation to the present inventive concept.

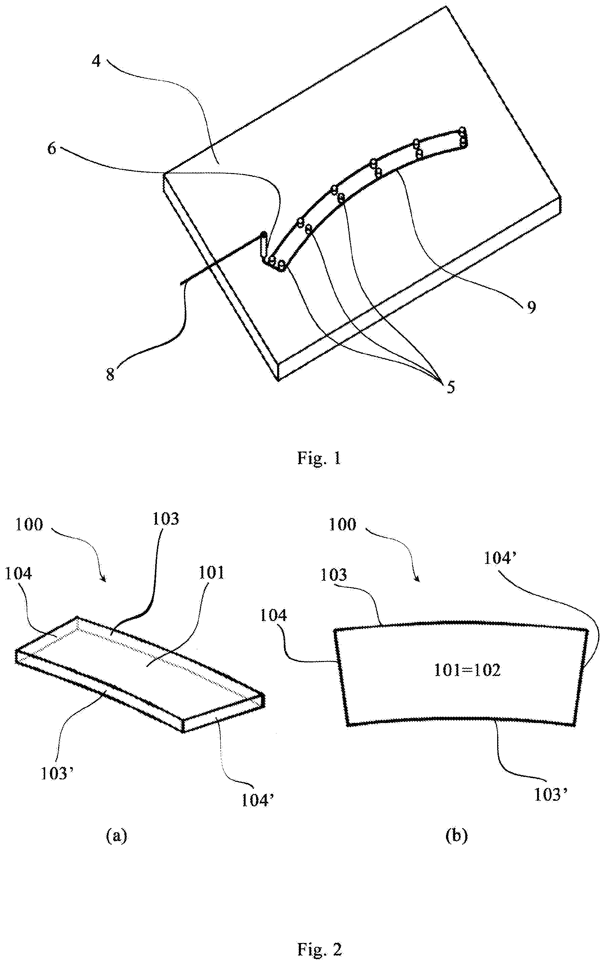

With reference to FIGURE 1, the end part of the plant for the production of the structural cage 10 of the segment 100 is shown. In this case, the unidirectional composite material 8 with which said structural cage 10 is manufactured is fiberglass.

Said fiberglass is transferred to a fixed nozzle 6 to start the production process described below.

The production method of the segment 100 develops according to the following steps:
A. preparing the fiberglass and transferring it to said nozzle 6;
B. making the single flat elements 1.a-1.b-1.c-... of the primary reinforcement 1, by the two sub-steps of:
   B.1 arranging a plurality of fixed pins 5 on a translating board 4. Said translating board 4 moves in the horizontal plane through a common moving mechanism. The fixed pins 5 shall be positioned at the vertices of the closed polygonal line 9 corresponding to the shape of the single flat elements 1.a-1.b-1.c-... of the primary reinforcement 1;
   B.2 pre-tensioning, in which the fiberglass, exiting from said fixed nozzle 6, is laid on said translating board 4, around the closed polygonal line 9 defined by said fixed pins 5. The force with which said fiberglass is pretensioned during the on-site laying thereof is preferably monitored by a common force sensor placed in the moving mechanism of said translating board 4 and may be adjusted within the preset parameters through the connection of said force sensor to common actuators placed in the moving mechanism of said board 4. Said pre-tensioning sub-step B.2 takes place in several steps, so as to overlap multiple layers of fiberglass, until the desired resistant section is obtained. Said resistant section will, in any case, be equivalent to a section of steel of between 8 mm and 20 mm;
C. making the single flat elements 2.a-2.b-2.c-... of the secondary reinforcement 2, by the two sub-steps of:
   C.1 arranging a plurality of fixed pins 5 on said translating board 4 positioning them so as to define the vertices of the closed polygonal line 9 corresponding to the shape of each single flat element 2.a-2.b-2.c-... of said secondary reinforcement 2. In particular, each flat element 2.a-2.b-2.c-... of said secondary reinforcement 2 is characterized by a plurality of housings 2.1 consisting of slits adapted to allow the fitting of a corresponding flat element 1.a-1.b-1.c-... of the primary reinforcement 1;
   C.2 pre-tensioning, in which the fiberglass, exiting from said nozzle 6, is pretensioned around the closed polygonal line 9 defined by said fixed pins 5 positioned on said translating board 4. Also in the case of the flat elements 2.a-2.b-2.c-... of the secondary reinforcement 2, the pre-tensioning C.2 takes place in a plurality of steps adapted to determine the overlapping of multiple layers until obtaining the desired resistant section. Said resistant section will, in any case, be equivalent to a section of steel of between 8 mm and 20 mm;
D. assembling, which takes place after a predetermined time starting from the end of said pre-tensioning steps B.2-C2 so as to allow the polymerization of the composite material. In this assembly step D, each flat element 1.a-1.b-1.c-... of the primary reinforcement 1 is fitted into the corresponding housings 2.1 arranged on each flat element 2.a-2.b-2.c-... of said secondary reinforcement 2, forming said structural cage 10;
E. strengthening, in which the connection between the single flat elements 1.a-1.b-1.c-... of the primary reinforcement 1 and the single flat elements 2.a-2.b-2.c-... of the secondary reinforcement 2 is made stable by a seam, preferably made with a glass roving pre-impregnated with a common photo-activated resin. By selecting a similar strengthening technique, the complete absence of metal elements inside the segment 100 is ensured. Thereby, the dual object of avoiding the oxidation which usually affects the metal and of allowing the disposal of the structural cage 10 along with the rest of the segment 100 is obtained;
F. casting, in which, using known techniques, the concrete is cast in a common formwork containing the structural cage 10 resulting from the previous strengthening step E, thus forming said cement segment 100 for tunnels.

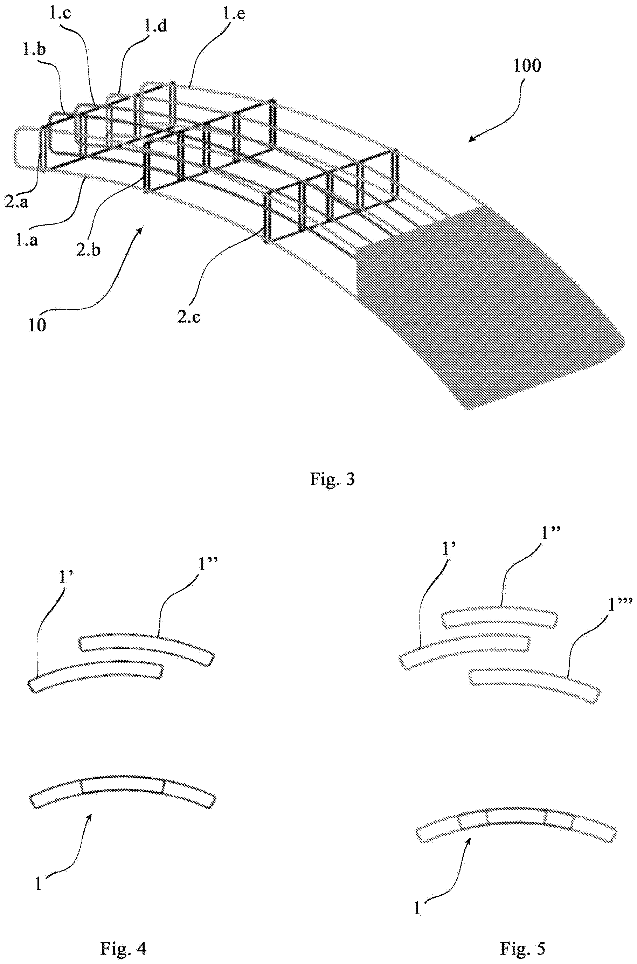

With reference to FIGURE 2 and to FIGURE 3 an example of segment 100 is shown. The final geometry thereof with trapezoidal plan should be noted. Each segment 100 consists of an extrados 101, an intrados 102, a pair of transverse surfaces 103-103' and a pair of longitudinal surfaces 104-104'. In particular, while said transverse surfaces 103-103' are parallel to one another, said longitudinal surfaces 104-104' are converging or diverging. Other embodiments of the cement segment 100, according to the present invention, provide for the linking of two or more primary rings 1'-1"-1''', equal to one another, adapted to form each element 1.a-1.b-1.c-... of said primary reinforcement 1. By virtue of the mutual sliding of said primary rings 1'-1"-1''' it is possible to make a large variety of segments 100 of different size, without changing the basic module, consisting precisely of the primary ring 1', thus speeding up and making the production process remarkably less expensive.

During the design step, it is advisable that the overlap areas between two primary rings 1'-1" linked to one another coincide with the area of greatest stress of the segment 100 when placed on site, in order to improve the cracking pattern thereof.

An alternative version of the production method offered by the present invention provides that, instead of a translating board 4 which moves on the horizontal plane with respect to a fixed nozzle 6, a moving mechanism is there connected to said nozzle 6 which allows the movement thereof with respect to an underlying fixed board 4. Also in this case, obviously, the moving mechanism of said nozzle 6 will be provided with a common force sensor allowing the monitoring and the adjustment of the pulling force with which the unidirectional composite yarn 8 is pretensioned.

Finally, it is apparent that amendments, additions or variations obvious for a person skilled in the art may be made to the invention described so far, without thereby departing from the scope of protection which is provided in the accompanying claims.

## Claims

1. Method of producing cement segments (100) for tunnels, reinforced with composite material, adapted for making three-dimensional structural elements for tunnels or culverts, **characterized in that** each segment (100) consists of a convex three-dimensional element with trapezoidal plan provided with an extrados (101), an intrados (102), a pair of parallel transverse surfaces (103-103') and a pair of longitudinal surface (104-104') with different positions; said segment (100) being reinforced by a structural cage (10) consisting of a plurality of single flat elements (1.a-1.b-1-c-...) adapted to constitute the primary reinforcement (1) and a plurality of single flat elements (2.a-2.b-2.c-...) adapted to constitute the secondary reinforcement (2), made of any unidirectional composite yarn (8); said production method consisting of the following steps:
(A) preparing the unidirectional composite yarn (8), according to known methods and techniques depending on the selected composite material and transferring the unidirectional composite yarn (8) to a common fixed nozzle (6);
(B) making the single flat elements (1.a-1.b-1.c-...) constituting said primary reinforcement (1), by the two sub-steps of:
(B.1) preparing a plurality of fixed pins (5) on a translating board (4); said translating board (4) being adapted to move in the horizontal plane through a common moving mechanism; said fixed pins (5) being positioned to define the vertices of a closed polygonal line (9) corresponding to the shape of each single flat element (1.a-1.b-1.c-...) constituting said primary reinforcement (1);
(B.2) pretensioning, in which the unidirectional composite yarn (8), exiting from said fixed nozzle (6), is pretensioned around said fixed pins (5) placed on said translating board (4), following the closed polygonal line (9) defined by said fixed pins (5); said pretensioning sub-step (B.2) taking place in a plurality of steps adapted to determine the overlapping of multiple layers of unidirectional composite yarn (8) until obtaining the desired resistant section;
(C) making the single flat elements (2.a-2.b-2.c-...) constituting said secondary reinforcement (2), by the two sub-steps of:
(C.1) arranging a plurality of fixed pins (5) on said translating board (4) positioning them so as to define the vertices of the closed polygonal line (9) corresponding to the shape of each single flat element (2.a-2.b-2.c-...) constituting said secondary reinforcement (2); each single flat element (2.a-2.b-2.c-...) of said secondary reinforcement (2) being **characterized by** a plurality of housings (2.1) consisting of slits adapted to allow the fitting of a corresponding flat element (1.a-1.b-1.c-...) of said primary reinforcement (1);
(C.2) pretensioning, in which the unidirectional composite yarn (8), exiting from said fixed nozzle (6), is pretensioned around said fixed pins (5) placed on said translating board (4), following the closed polygonal line (9) defined by said fixed pins (5); said pretensioning sub-step (C.2) taking place in a plurality of steps adapted to determine the overlapping of multiple layers of unidirectional composite yarn (8) until obtaining the desired resistant section;
(D) assembly; said assembly step (D) takes place after the complete polymerization of said unidirectional composite yarn (8); in said assembly step (G), each single flat element (1.a-1.b-1.c-...) of said primary reinforcement (1) is fitted into said special housings (2.1) arranged on each single flat element (2.a-2.b-2.c-...) of said secondary reinforcement (2), forming said structural reinforcement cage (10) of said segment (100);
(E) strengthening, in said strengthening step (E), a seam is made, preferably with a glass roving pre-impregnated with a common photo-activated resin, so as to stably connect said primary reinforcement (1) to said secondary reinforcement (2);
(F) casting, in said casting step (F), using known concrete working techniques, the concrete is cast in a common formwork containing said structural cage (10), thus forming said cement segment (100) for tunnels.

2. Method of producing cement segments (100) for tunnels, reinforced with composite material, according to the preceding claim 1, **characterized in that** said unidirectional composite yarn (8) is fiberglass.

3. Method of producing cement segments (100) for tunnels, reinforced with composite material, according to any one of the preceding claims 1 or 2, **characterized in that** said nozzle (6) is provided with a common moving mechanism adapted to allow the displacement in the horizontal plane of said nozzle (6), during said pre-tensioning steps (B.2-C.2), so as to pretension said unidirectional composite yarn (8) around said fixed pins (5) prepared on said board (4), said board (4) being fixed.

4. Method of producing cement segments (100) for tunnels, reinforced with composite material, according to any one of the preceding claims, **characterized in that** said moving mechanism of said board (4) or said moving mechanism of said nozzle (6) is provided with a common force sensor adapted to monitor the pulling force with which said unidirectional composite yarn (8) is pretensioned around said fixed pins (5) during said pre-tensioning steps (B.2-C.2); said force sensor being connected to common actuators adapted to reversibly adjust, within preset parameters, the pulling force with which said unidirectional composite yarn (8) is pretensioned.

5. Method of producing cement segments (100) for tunnels, reinforced with composite material, according to any one of the preceding claims, **characterized in that** said resistant section of each flat element (1.a-1.b-1.c-...) of said primary reinforcement (1) and of each flat element (2.a-2.b-2.c-...) of said secondary reinforcement (2) is equal to an equivalent section of steel of between 8 mm and 20 mm.

6. Method of producing cement segments (100) for tunnels, reinforced with composite material, according to any one of the preceding claims, **characterized in that** each flat element (1.a-1.b-1.c-...) of said primary reinforcement (1) consists of a pair of primary rings (1'-1") equal to each other and assembled in a linked fashion.

7. Method of producing cement segments (100) for tunnels, reinforced with composite material, according to any one of the preceding claims, **characterized in that** each flat element (1.a-1.b-1.c-...) of said primary reinforcement (1) consists of a plurality of primary rings (1'-1"-1'''-...) equal to one another and assembled in a linked fashion.

8. Method of producing cement segments (100) for tunnels, reinforced with composite material, according to any one of the preceding claims 6 or 7, **characterized in that** all said flat elements (1.a-1.b-1.c-...) of said primary reinforcement (1) which constitutes said structural cage (10) has an overlap between a primary ring (1') and the link thereof (1") at the area of greatest stress of the segment (100) when installed.

9. Method of producing cement segments (100) for tunnels, reinforced with composite material, according to any one of the preceding claims, **characterized in that** said structural cage (10) can only be disposed of along with said segment (100).

## Patentansprüche

1. Verfahren zum Herstellen von mit Kompositwerkstoff verstärkten Zementsegmenten (100) für Tunnels, die zum Herstellen dreidimensionaler Strukturelemente für Tunnel oder Durchlässe angepasst sind, **dadurch gekennzeichnet, dass** jedes Segment (100) aus einem konvexen dreidimensionalen Element mit trapezförmigem Grundriß besteht, das mit einer äußeren Bogenfläche (101), einer inneren Bogenfläche (102), einem Paar paralleler Transversalflächen (103-103') und einem Paar Längsflächen (104-104') mit unterschiedlichen Positionen versehen ist; wobei das Segment (100) durch einen Strukturkäfig (10) verstärkt ist, der aus mehreren einzelnen flachen Elementen (1.a- 1.b-1-c- ...), die dazu angepasst sind, die primäre Bewehrung (1) zu bilden, und mehreeren einzelnen flachen Elementen (2.a-2.b-2.c- ...), die dazu angepasst sind, die sekundäre Bewehrung (2) zu bilden, die aus einem beliebigen unidirektionalen Komposit-Garn (8) hergestellt sind; wobei das Herstellungsverfahren aus den folgenden Schritten besteht:
(A) Vorbereiten des unidirektionalen Komposit-Garns (8) gemäß bekannter Verfahren und Techniken in Abhängigkeit von dem gewählten Kompositwerkstoff und Überführen des unidirektionalen Komposit-Garns (8) in eine übliche fixierte Düse (6);
(B) Herstellen der einzelnen flachen Elemente (1.a-1.b-1.c- ...), die die primäre Bewehrung (1) bilden, durch die zwei Unterschritte
(B.1) Zubereiten mehrerer fixierter Stifte (5) auf einer Umsetzungstafel (4); wobei die Umsetzungstafel (4) dazu angepasst ist, sich durch einen üblichen Bewegungsmechanismus in der horizontalen Ebene zu bewegen; wobei die fixierten Stifte (5) positioniert sind, um die Vertices einer geschlossenen polygonalen Linie (9) zu definieren, die der Form eines jeden einzelnen flachen Elements (1.a-1.b-1.c-...), das die primäre Bewehrung (1) bildet, entspricht;
(B.2) Vorspannen, bei dem das unidirektionale Komposit-Garn (8), das aus der fixierten Düse (6) austritt, der durch die fixierten Stifte (5) definierten, geschlossenen polygonalen Linie (9) folgen um die fixierten Stifte (5), die auf der Umsetzungstafel (4) angeordnet sind, vorgespannt wird; wobei der Unterschritt des Vorspannens (B.2) in mehreren Schritten erfolt, die dazu angepasst sind, das Überlappen mehrerer Schichten des unidirektionalen Komposit-Garns (8) zu bestimmen, bis der gewünschte resistente Abschnitt erhalten wird;
(C) Herstellen der einzelnen flachen Elemente (2.a-2.b-2.c- ...), die die sekundäre Bewehrung (2) bilden, durch die zwei Unterschritte von:
(C.1) Anordnen mehrere fixierter Stifte (5) auf der Umsetzungstafel (4), die so positioniert werden, dass sie die Vertices der geschlossenen polygonalen Linie (9) definieren, die der Form jedes einzelnen flachen Elements (2.a-2.b-2.c- ...) entspricht, das die sekundäre Bewehrung (2) bildet; jedes einzelne flache Element (2.a- 2.b-2.c- ...) der sekundären Bewehrung (2) durch mehrere Gehäuse (2.1) gekennzeichnet ist, die aus Schlitzen bestehen, die dazu angepasst sind, den Einbau eines entsprechenden flachen Elementes (1.a-1.b-1.c- ...) der primären Bewehrung (1) zu ermöglichen;
(C.2) Vorspannen, bei dem das unidirektionale Komposit-Garn (8), das aus der fixierten Düse (6) austritt, der durch die fixierten Stifte (5) definierten, geschlossenen polygonalen Linie (9) folgend, um die fixierten Stifte (5), die auf der Umsetzungstafel (4) angeordnet sind, vorgespannt wird; wobei der Vorspann-Unterschritt (C.2) in mehreren Schritten erfolgt, die dazu angepasst sind, das Überlappen mehrerer Schichten des unidirektionalen Komposit-Garns (8) zu bestimmen, bis der gewünschte resistente Abschnitt erhalten wird;
(D) Zusammenbau; wobei der Zusammenbauschritt (D) nach der vollständigen Polymerisation des unidirektionalen Komposit-Garns (8) erfolgt; in dem Zusammenbauschritt (G) jedes einzelne flache Element (1.a-1.b-1.c-...) der primären Bewehrung (1) in die speziellen Gehäuse (2.1), die auf jedem einzelnen flachen Element (2.a-2.b-2.c- ...) der sekundären Bewehrung (2) angeordnet sind, den Strukturverstärkungskäfig (10) des Segments (100) bildend eingepasst wird;
(E) Verstärken, in dem Verstärkungsschritt (E) wird eine Naht hergestellt, vorzugsweise mit einem Glasroving, der mit einem üblichen photoaktivierten Harz vorimprägniert ist, um die primäre Bewehrung (1) mit der sekundären Bewehrung (2) stabil zu verbinden;
(F) Gießen, wobei in dem Gießschritt (F) unter Verwendung bekannter Betonverarbeitungstechniken der Beton in eine übliche Schalung gegossen wird, die den Strukturkäfig (10) enthält, wodurch das Zementsegment (100) für Tunnels gebildet wird.

2. Verfahren zum Herstellen von mit Kompositwerkstoff verstärkten Zementsegmenten (100) für Tunnels gemäß dem vorhergehenden Anspruch 1, **dadurch gekennzeichnet, dass** das unidirektionale Komposit-Garn (8) Glasfaser ist.

3. Verfahren zum Herstellen von mit Kompositwerkstoff verstärkten Zementsegmenten (100) für Tunnels gemäß einem der vorangehenden Ansprüche 1 oder 2, **dadurch gekennzeichnet, dass** die Düse (6) mit einem üblichen Bewegungsmechanismus versehen ist, der dazu angepasst ist, die Verschiebung der Düse (6) in der horizontalen Ebene während der Vorspannungsschritte (B.2-C.2) zu ermöglichen, um das unidirektionale Komposit-Garn (8) um die fixierten Stifte (5), die auf der Tafel (4) vorbereitet sind, vorzuspannen, wobei die Tafel (4) fixiert ist.

4. Verfahren zum Herstellen von mit Kompositwerkstoff verstärkten Zementsegmenten (100) für Tunnels gemäß einem der vorangehenden Ansprüche, **dadurch gekennzeichnet, dass** der Bewegungsmechanismus der Tafel (4) oder der Bewegungsmechanismus der Düse (6) mit einem üblichen Kraftsensor versehen ist, der dazu angepasst ist, die Zugkraft zu überwachen, mit der das unidirektionale Komposit-Garn (8) um die fixierten Stifte (5) während der Vorspannschritte (B.2-C.2) vorgespannt wird; wobei der Kraftsensor mit üblichen Aktoren verbunden ist, die dazu angepasst sind, die Zugkraft, mit der das unidirektionale Komposit-Garn (8) vorgespannt wird, innerhalb vorgegebener Parameter reversibel einzustellen.

5. Verfahren zum Herstellen von mit Kompositwerkstoff verstärkten Zementsegmenten (100) für Tunnels gemäß einem der vorangehenden Ansprüche, **dadurch gekennzeichnet, dass** der resistente Abschnitt jedes flachen Elements (1.a-1.b-1.c- ...) der primären Bewehrung (1) und jedes flachen Elements (2.a-2.b-2.c- ...) der sekundären Bewehrung (2) gleich einem äquivalenten Abschnitt aus Stahl zwischen 8 mm und 20 mm ist.

6. Verfahren zum Herstellen von mit Kompositwerkstoff verstärkten Zementsegmenten (100) für Tunnels gemäß einem der vorangehenden Ansprüche, **dadurch gekennzeichnet, dass** jedes flache Element (1.a-1.b-1.c-...) der primären Bewehrung (1) aus einem Paar von Primärringen (1'-1"), die zueinander gleich sind, auf eine verbundene Weise zusammengesetzt sind.

7. Verfahren zum Herstellen von mit Kompositwerkstoff verstärkten Zementsegmenten (100) für Tunnels gemäß einem der vorangehenden Ansprüche, **dadurch gekennzeichnet, dass** jedes flache Element (1.a-1.b-1.c-...) der primären Bewehrung (1) aus mehreren primären Ringen (1'-1"-1'''-...) besteht, die zueinander gleich und auf sind verbundene Weise zusammengesetzt sind.

8. Verfahren zum Herstellen von mit Kompositwerkstoff verstärkten Zementsegmenten (100) für Tunnels gemäß einem der vorangehenden Ansprüche 6 oder 7, **dadurch gekennzeichnet, dass** alle flachen Elemente (1.a-1.b-1.c-...) der primären Bewehrung (1), die den Strukturkäfig (10) bilden, eine Überlappung zwischen einem primären Ring (1') und dessen Verbindung (1") in dem Bereich größter Belastung des Segments (100) im eingebauten Zustand aufweisen.

9. Verfahren zum Herstellen von mit Kompositwerkstoff verstärkten Zementsegmenten (100) für Tunnels gemäß einem der vorangehenden Ansprüche, **dadurch gekennzeichnet, dass** der Strukturkäfig (10) nur zusammen mit dem Segment (100) angeordnet werden kann.

## Revendications

1. Procédé de production de segments (100) en ciment pour des tunnels, renforcés de matériau composite, adaptés pour réaliser des éléments structuraux tridimensionnels pour des tunnels ou des dalots, **caractérisé en ce que** chaque segment (100) est constitué d'un élément tridimensionnel convexe à plan trapézoïdal doté d'un extrados (101), d'un intrados (102), d'une paire de surfaces transversales parallèles (103-103') et d'une paire de surfaces longitudinales (104-104') ayant différentes positions ; ledit segment (100) étant renforcé par une cage structurale (10) constituée d'une pluralité d'éléments plats individuels (1.a-1.b-1.c-...) adaptée pour former l'armature primaire (1) et une pluralité d'éléments plats (2.a-2.b-2.c-...) individuels adaptée pour former l'armature secondaire (2), réalisés en tout fil composite unidirectionnel (8) ; ledit procédé de production comprenant les étapes suivantes :
(A) la préparation du fil composite unidirectionnel (8), selon des procédés et des techniques connus en fonction du matériau composite sélectionné et le transfert du fil composite unidirectionnel (8) vers une buse (6) fixe commune ;
(B) la réalisation des éléments plats individuels (1.a-1.b-1.c-...) formant ladite armature primaire (1), par les deux sous-étapes suivantes :
(B.1) la préparation d'une pluralité de broches fixes (5) sur une planche (4) de translation ; ladite planche (4) de translation étant adaptée pour se déplacer dans le plan horizontal à travers un mécanisme de déplacement commun ; lesdites broches fixes (5) étant positionnées pour définir les sommets d'une ligne polygonale fermée (9) correspondant à la forme de chaque élément plat individuel (1.a-1.b-1.c-...) formant ladite armature primaire (1) ;
(B.2) la précontrainte, dans laquelle le fil composite unidirectionnel (8), sortant de ladite buse (6) fixe, est précontraint autour desdites broches fixes (5) placées sur ladite planche (4) de translation, suivant la ligne polygonale fermée (9) définie par lesdites broches fixes (5) ; ladite sous-étape de précontrainte (B.2) se déroulant en une pluralité d'étapes adaptées pour déterminer le chevauchement de plusieurs couches de fil composite unidirectionnel (8) jusqu'à l'obtention de la section résistante souhaitée ;
(C) la réalisation des éléments plats (2.a-2.b-2.c-...) individuels formant ladite armature secondaire (2), par les deux sous-étapes suivantes :
(C.1) l'agencement d'une pluralité de broches fixes (5) sur ladite planche (4) de translation en les positionnant de manière à définir les sommets de la ligne polygonale fermée (9) correspondant à la forme de chaque élément plat (2.a-2.b-2.c-...) individuel formant ladite armature secondaire (2) ; chaque élément plat (2.a-2.b-2.c-...) individuel de ladite armature secondaire (2) étant **caractérisé par** une pluralité de logements (2.1) constitués de fentes adaptées pour permettre l'ajustement d'un élément plat correspondant (1.a-1.b-1.c-...) de ladite armature primaire (1) ;
(C.2) la précontrainte, dans laquelle le fil composite unidirectionnel (8), sortant de ladite buse (6) fixe, est précontraint autour desdites broches fixes (5) placées sur ladite planche (4) de translation, suivant la ligne polygonale fermée (9) définie par lesdites broches fixes (5) ; ladite sous-étape de précontrainte (C.2) se déroulant en une pluralité d'étapes adaptées pour déterminer le chevauchement de plusieurs couches de fil composite unidirectionnel (8) jusqu'à l'obtention de la section résistante souhaitée ;
(D) l'assemblage ; ladite étape d'assemblage (D) se déroule après la polymérisation complète dudit fil composite unidirectionnel (8) ; dans ladite étape d'assemblage (G), chaque élément plat individuel (1.a-1.b-1.c-...) de ladite armature primaire (1) est ajusté dans lesdits logements (2.1) spéciaux agencés sur chaque élément plat (2.a-2.b-2.c-...) individuel de ladite armature secondaire (2), formant ladite cage d'armature structurale (10) dudit segment (100) ;
(E) le renforcement, lors de ladite étape de renforcement (E), un joint est réalisé, de préférence avec un stratifil de verre pré-imprégné d'une résine photo-activée commune, de manière à relier de manière stable ladite armature primaire (1) à ladite armature secondaire (2) ;
(F) la coulée, dans ladite étape de coulée (F), en utilisant des techniques connues de travail de béton, le béton est coulé dans un coffrage commun contenant ladite cage structurale (10), formant ainsi ledit segment (100) en ciment pour des tunnels.

2. Procédé de production de segments (100) en ciment pour des tunnels, renforcés de matériau composite, selon la revendication précédente 1, **caractérisé en ce que** ledit fil composite unidirectionnel (8) est en fibre de verre.

3. Procédé de production de segments (100) en ciment pour des tunnels, renforcés de matériau composite, selon l'une des revendications précédentes 1 ou 2,
**caractérisé en ce que** ladite buse (6) est dotée d'un mécanisme de déplacement commun adapté pour permettre le déplacement dans le plan horizontal de ladite buse (6), pendant lesdites étapes de précontrainte (B.2-C.2), de manière à précontraindre ledit fil composite unidirectionnel (8) autour desdites broches fixes (5) préparées sur ladite planche (4), ladite planche (4) étant fixe.

4. Procédé de production de segments (100) en ciment pour des tunnels, renforcés de matériau composite, selon l'une des revendications précédentes,
**caractérisé en ce que** ledit mécanisme de déplacement de ladite planche (4) ou ledit mécanisme de déplacement de ladite buse (6) est doté d'un capteur de force commun adapté pour surveiller la force de traction par laquelle ledit fil composite unidirectionnel (8) est précontraint autour desdites broches fixes (5) pendant lesdites étapes de précontrainte (B.2-C.2) ; ledit capteur de force étant relié à des actionneurs communs adaptés pour régler de manière réversible, dans des paramètres prédéfinis, la force de traction par laquelle ledit fil composite unidirectionnel (8) est précontraint.

5. Procédé de production de segments (100) en ciment pour des tunnels, renforcés de matériau composite, selon l'une des revendications précédentes,
**caractérisé en ce que** ladite section résistante de chaque élément plat (1.a-1.b-1.c-...) de ladite armature primaire (1) et de chaque élément plat (2.a-2.b-2.c-,...) de ladite armature secondaire (2) est égale à une section équivalente en acier comprise entre 8 mm et 20 mm.

6. Procédé de production de segments (100) en ciment pour des tunnels, renforcés de matériau composite, selon l'une des revendications précédentes,
**caractérisé en ce que** chaque élément plat (1.a-1.b-l.c-...) de ladite armature primaire (1) est constitué d'une paire d'anneaux primaires (1'-1") égaux l'un à l'autre et assemblés de façon liée.

7. Procédé de production de segments (100) en ciment pour des tunnels, renforcés de matériau composite, selon l'une des revendications précédentes, **caractérisé en ce que** chaque élément plat (1.a-1.b-1.c-...) de ladite armature primaire (1) est constitué d'une pluralité d'anneaux primaires (1'-1"-1'''-...) égaux les uns aux autres et assemblés de façon liée.

8. Procédé de production de segments (100) en ciment pour des tunnels, renforcés de matériau composite, selon l'une des revendications précédentes 6 ou 7, **caractérisé en ce que** tous lesdits éléments plats (1.a-1.b-1.c-...) de ladite armature primaire (1) qui forme ladite cage structurale (10) présentent un chevauchement entre un anneau primaire (1') et la liaison de celui-ci (1") au niveau de la zone de plus grande contrainte du segment (100) lorsqu'il est installé.

9. Procédé de production de segments (100) en ciment pour des tunnels, renforcés de matériau composite, selon l'une des revendications précédentes,
**caractérisé en ce que** ladite cage structurale (10) ne peut être disposée que conjointement avec ledit segment (100).
